# EUROPÄISCHE PATENTSCHRIFT

(11) **EP 1 163 139 B1**
(45) Veröffentlichungstag und Bekanntmachung des Hinweises auf die Patenterteilung: **07.09.2005**
(21) Anmeldenummer: 99931203.6
(22) Anmeldetag: 28.06.1999
(51) Int. Cl.: B60T 8/48, B60T 8/24, B60T 8/36, F16K 39/02

(54) **BLOCKIERGESCHÜTZE BREMSANLAGE FÜR EIN LANDFAHRZEUG**
ANTI-BLOCKING BRAKING SYSTEM FOR A LAND VEHICLE
SYSTEME DE FREINAGE A ANTIBLOCAGE POUR UN VEHICULE ROUTIER

(30) Priorität: 24.03.1999 WO PCT/EP99/02000
(43) Veröffentlichungstag der Anmeldung: 19.12.2001
(73) Patentinhaber: LUCAS INDUSTRIES public limited company, Solihull B90 4LA (GB); Varity GmbH, 56070 Koblenz (DE)
(72) Erfinder: GEGALSKI, Helmut, D-56218 Mühlheim-Kärlich (DE); WALD, Thomas, D-56288 Holnich (DE); KNECHTGES, Josef, D-56727 Mayen (DE); BACH, Thomas, D-56567 Koblenz (DE); MARX, Andreas, D-56220 Kaltenengers (DE); HELLER, Frank, D-56567 Neuwied (DE); SCHWARZ, Michael, D-56070 Koblenz (DE); WAGNER, Thomas, D-56179 Vallendar (DE)
(74) Vertreter: Schmidt, Steffen J.
(86) Internationale Anmeldenummer: PCT/EP1999/004466
(87) Internationale Veröffentlichungsnummer: WO 2000/059763

(56) Entgegenhaltungen:
- EP-A- 0 460 408
- WO-A-93/07035
- WO-A-96/15926
- WO-A-96/36518
- WO-A-97/06040
- WO-A-97/07002
- WO-A-98/13242
- WO-A-98/57834
- DE-A- 4 035 527
- DE-A- 4 118 719
- DE-A- 19 530 899
- DE-B- 1 235 087
- FR-A- 2 615 585
- US-A- 3 447 568
- US-A- 3 575 213

## Beschreibung

### Hintergrund der Erfindung

Die Erfindung betrifft eine blockiergeschützte Bremsanlage für ein Landfahrzeug, die insbesondere zur Antriebsschlupfsowie zur Fahrstabilitätsregelung eingerichtet ist, derart, daß eine Pumpe zum Betätigen einer Radbremse Bremsfluid gesteuert von einer Bremsdruckgebereinheit entnimmt und der Radbremse zuführt.

### Stand der Technik

Aus der DE 40 35 527 A1 ist es bekannt, zwischen der Eingangsseite der Pumpe und der Bremsdruckgebereinheit ein 2 Anschluß-/2 Stellungsventil vorzusehen. Diese Ventilanordnung hat nur eine Betätigungs- bzw. Verbindungsstellung. Dabei muß der Strömungsquerschnitt dieser einen Betätigungs- bzw. Verbindungsstellung sehr groß bemessen sein, damit beim Eintritt in die Fahrstabilitätsregelung über die Pumpe ein schneller Druckaufbau in der Radbremse erreicht wird, insbesondere um bei niedrigen Temperaturen ein gutes Ansaugverhalten (hohe Pumpleistung) der Pumpe zu erreichen. Ein großer Strömungsquerschnitt bringt jedoch als Nachteile starke hydraulische Strömungsgeräusche und heftige Pedalrückwirkungen mit sich, was als störend und wenig komfortabel empfunden wird.

Eine derartige Ventilanordnung ist als sogenanntes "Normal-Closed" (NC)-Ventil bekannt. Im unbetätigten Zustand, also der Grund- bzw. Normalstellung, ist die Strömungsverbindung zwischen den Fluidanschlüssen der Ventilanordnung gesperrt, wogegen im betätigten Zustand die Strömungsverbindung zwischen den Fluidanschlüssen hergestellt ist. Damit im unbetätigten Zustand die Strömungsverbindung zwischen den Fluidanschlüssen gesperrt ist, ist ein Ventilglied unter Einwirkung einer Federanordnung vorgespannt, so dass dieses an einem Dichtsitz abdichtend zur Anlage kommt. Um im betätigten Zustand die Strömungsverbindung zwischen den Fluidanschlüssen herzustellen, ist es erforderlich, daß die Betätigungseinrichtung eine Kraft aufbringt, die zumindest die Vorspannkraft der Federanordnung zu überwinden vermag, so daß das Ventilglied von dem Dichtsitz abhebt.

Allerdings ist es in den meisten Anwendungsfällen-nicht ausreichend, wenn die Betätigungseinrichtung eine Kraft aufbringt, die nur geringfügig größer ist als die Vorspannkraft der Federanordnung, da im Betrieb an den Fluidanschlüssen der Ventilanordnung unterschiedliche Fluiddrücke auftreten, wodurch auf das Ventilglied zusätzlich eine Druckdifferenzkraft wirkt, die je nach Wirkrichtung der von der Betätigungseinrichtung aufgebrachten Kraft entgegengerichtet ist. Demnach ist die Betätigungseinrichtung so auszulegen, daß die Betätigungskraft größer ist als die Summe aus der Vorspannkraft der Federanordnung und der maximal zu erwartenden Druckdifferenzkraft, um eine sichere Funktion der Ventilanordnung zu gewährleisten. Ein Nachteil dabei ist, daß die Betätigungseinrichtung für eine Vielzahl von Situationen überdimensioniert sein muß, insbesondere dann, wenn wie bei den überwiegenden Verwendungen im betätigten Zustand der Ventilanordnung ein großer Strömungsquerschnitt gefordert ist, um eine Drosselwirkung der Ventilanordnung zu unterbinden. Ein großer Strömungsquerschnitt bedeutet aber zusätzlich eine sehr hohe Druckdifferenzkraft, derzufolge eine hohe Betätigungskraft aufzubringen ist. Dadurch entstehen hohe Kosten und ein hoher Aufwand bei Auslegung der Ventilanordnung. Auch baut die Ventilanordnung dadurch relativ groß.

Bei einer Bremsanlage, die zur Antriebsschlupf- bzw. Fahrstabilitätsregelung eingerichtet ist, soll es möglich sein, unabhängig von einer Bremspedalbetätigung in der/den Radbremse/n Bremsdruck zu erzeugen, um durch aktiven Bremseingriff ein Durchdrehen der angetriebenen Räder bzw. ein Schleudern des Fahrzeugs, insbesondere beim Durchlaufen von Kurven, zu verhindern. In bekannter Weise baut eine solche Bremsanlage auf einer konventionellen Bremsanlage auf, die bereits zur Antiblockierregelung eingerichtet ist.

Um die zur Rückförderung von Bremsfluid bei der Antiblokkierregelung ohnehin vorhandene Pumpe auch zur Bremsdrukkerzeugung bei der Antriebsschlupf- bzw. Fahrstabilitätsregelung verwenden zu können, ist es aus der DE 38 32 023 C2 bekannt, pro Bremskreis zusätzlich ein 3 Anschluß-/2 Stellungsventil einzusetzen, das im nicht angesteuerten Zustand zur Normalbremsung oder Antiblockierregelung die Verbindung zwischen Hauptbremszylinder und Ausgangsseite der Pumpe herstellt und die Verbindung zur Eingangsseite der Pumpe trennt. Im angesteuerten Zustand trennt das 3 Anschluß-/2 Stellungsventil zur Antriebsschlupfregelung die Verbindung zwischen Hauptbremszylinder und Ausgangsseite der Pumpe und stellt die Verbindung zur Eingangsseite der Pumpe her, so daß zur Bremsdruckerzeugung die Pumpe eingangsseitig Bremsfluid vom Hauptzylinder ansaugen und ausgangsseitig in die Radbremse/n fördern kann. Die Bremsdruckmodulation während der Antriebsschlupfregelung erfolgt dann auf bekannte Weise mittels der für die Antiblockierregelung vorgesehenen Ventile.

Hierbei besteht das Problem, daß die Bremsdruckmodulation zu stark schwankenden Druckniveaus zwischen Ausgangsseite der Pumpe und der/den Radbremse/n führt, was störende hydraulische Strömungsgeräusche zur Folge hat.

Gemäß der vorstehend diskutierten DE 40 35 527 A1 werden pro Bremskreis anstelle des aus der DE 38 32 023 C2 bekannten zusätzlichen 3 Anschluß-/2 Stellungsventils nun eine zwei 2 Anschluß-/2 Stellungsventile umfassende Ventilkombination eingesetzt, die in einem angesteuerten Zustand zur Antriebsschlupfregelung sowohl die Verbindung zwischen Hauptzylinder und der Ausgangsseite der Pumpe, als auch die Verbindung zur Eingangsseite der Pumpe trennt.

Nachdem die aus der DE 38 32 023 C2 bekannten Ventilstellungen bereits einen Druckaufbau und Druckabbau zulassen, ermöglicht diese weitere Ventilstellung auch ein Druckhalten, da die Eingangsseite der Pumpe abgesperrt ist, so daß kein Bremsfluid angesaugt werden kann. Dadurch soll es möglich sein, die Bremsmodulation während der Antriebsschlupfregelung ausschließlich über die beiden 2 Anschluß-/2 Stellungsventile vorzunehmen, also ohne die für die Antiblockierregelung vorgesehenen Ventile zu schalten. Vorgenannte hydraulische Strömungsgeräusche werden dadurch abgesenkt.

Von Nachteil ist hierbei allerdings, daß eine präzise Bremsdruckmodulation während der Antriebsschlupfregelung nicht möglich ist. Denn auch wenn die Eingangsseite der Pumpe zum Druckhalten abgesperrt ist, so steht an der Eingangsseite der Pumpe stets ein kleines Fluidvolumen an, durch das anstatt des gewünschten Druckhaltens ein kleiner Druckaufbau bewirkt wird, so daß insgesamt die Druckmodulation ungenau wird. Wenn die Genauigkeit der in der DE 40 35 527 A1 beschriebenen Druckmodulation zwar für eine Antriebsschlupfregelung ausreichend sein mag, so ist sie auf eine Fahrstabilitätsregelung gar nicht oder nur unter Tolerierung einer eingeschränkten Leistung der Bremsanlage übertragbar, da ein aktiver Bremseneingriff bei Kurvenfahrt zum Kompensieren einer Übersteuer- oder Untersteuertendenz des Fahrzeugs eine präzise Bremsdruckmodulation bedingt. Eine zu grobe Bremsdruckmodulation würde sich hier schon aus Gründen der Sicherheit der Bremsanlage verbieten.

Die WO 93/07035 A1 beschreibt eine hydraulische Bremsanlage zur Erzeugung einer Differentialsperre durch Bremseingriff. In einer ersten Betriebsart befinden sich während einer Druckabbauphase ein Ladeventil und ein Auslassventil in Sperrstellung, ein Absperrventil ist geöffnet und die Stellung eines Einlassventils ist beliebig. In einer zweiten Betriebsart sind während einer Druckabbauphase das Ladeventil sowie das Absperrventil geöffnet und das Auslassventil geschlossen, während die Stellung des Einlassventils beliebig ist. In beiden Betriebsarten wird das Bremsfluid während der Druckabbauphase von der Radbremse in den Hauptbremszylinder geleitet.

### Der Erfindung zugrundeliegendes Problem

Der Erfindung liegt die Aufgabe zugrunde, eine blockiergeschützte Bremsanlage bereitzustellen, die eine gute Steuerung des Druckabbaus in der Bremsanlage ermöglicht. Die erfindungsgemäße Bremsanlage soll den an eine Fahrstabilitätsregelung gestellten hohen Anforderungen genügen und gleichzeitig für die Antriebsschlupfregelung anwendbar sein.

### Erfindungsgemäße Lösung

Bei der erfindungsgemäßen blockiergeschützten Bremsanlage ist das dritte Elektromagnetventil während der Betriebsphase "Druck halten" entgegen der in der DE 40 35 527 A1 beschriebenen Stellung der Elektromagnetventile in der betätigten Stellung. Demnach ist die Verbindung zwischen dem Ausgangsanschluß der Pumpe und der Radbremse gesperrt und ein an der Eingangsseite der Pumpe anstehendes kleines Fluidvolumen kann nicht, wie bei der in der DE 40 35 527 A1 beschriebenen Bremsanlage möglich, durch die Pumpe an die Radbremse gefördert werden. Durch diese an sich einfache Änderung der Stellung des Elektromagnetventils wird überraschenderweise die Genauigkeit der Druckmodulation erheblich verbessert. Diese hohe Genauigkeit ist insbesondere für die Fahrstabilitätsregelung von Bedeutung.

Ferner ist während einer Betriebsphase "Druck abbauen" die erste Ventilanordnung in der unbetätigten Stellung und das erste, zweite und dritte Elektromagnetventil sind in jeweils der betätigten Stellung. Anstatt, wie in der DE 40 35 527 A1 beschrieben, den Druck nur in die Bremsdruckgebereinheit abströmen zu lassen, wird erfindungsgemäß durch das offene zweite Elektromagnetventil Bremsfluid in den Speicher geleitet und so definiert von der Radbremse weggefördert. Am Speicher steht dem abströmenden Bremsfluid ein durch eine Feder erzeugter Gegendruck entgegen, so daß der Druckabbau dadurch in einem genau vorgegebenen Verlauf erfolgt. Durch das dabei betätigte - also gesperrte - dritte Elektromagnetventil wird währenddessen verhindert, daß unter Druck stehendes Bremsfluid aus der Bremsleitung am Ausgangsanschluß der Pumpe zur Radbremse gelangt, was den Druckabbau ungewollt schwächen würde.

Ferner ist eine blockiergeschützte Bremsanlage, die nicht Gegenstand der Erfindung ist, dahingehend weiterentwickelt, daß zwischen der Bremsdruckgebereinheit und einem Eingangsanschluß der Pumpe eine Ventilanordnung angeordnet ist, die als 2-Anschluß-/3-Stellungsventil ausgestaltet ist, das in einer unbetätigten (Grund-)Stellung die Verbindung zwischen der Bremsdruckgebereinheit und dem Eingangsanschluß der Pumpe sperrt, das in einer ersten Betätigungsstellung eine sekundäre Strömungsverbindung zwischen der Bremsdruckgebereinheit und dem Eingangsanschluß der Pumpe herstellt, und das in einer zweiten Betätigungsstellung eine primäre Strömungsverbindung zwischen der Bremsdruckgebereinheit und dem Eingangsanschluß der Pumpe herstellt, wobei die primäre Strömungsverbindung einen größeren Strömungsquerschnitt aufweist als die sekundäre Strömungsverbindung.

Alle Nachteile der oben beschriebenen bekannten Anordnung (DE 40 35 527 A1) lassen sich mit dieser Lösung, die zusätzlich eine weitere Betätigungsstellung mit einem verringerten Strömungsquerschnitt bereitstellt, vermeiden. Denn dadurch kann der Volumenstrom von der Bremsdruckgebereinheit zur Pumpe präzise dosiert werden. Dies gilt vor allem dann, wenn der Volumenstrom durch gezielten zeitlichen Wechsel zwischen der Grundstellung und der ersten Betätigungsstellung moduliert wird. Folglich kann während der Regelung des Bremsdruckes in der Radbremse das Druckniveau an der Ausgangsseite der Pumpe nahezu dem Druckniveau in der Radbremse angepaßt werden, wodurch weiterhin hydraulische Geräusche reduziert werden.

Ein weiterer Vorteil dieser blockiergeschützten Bremsanlage ist, daß bevor die primäre Strömungsverbindung hergestellt wird, zunächst eine sekundäre Strömungsverbindung hergestellt wird. Aufgrund der sekundären Strömungsverbindung wird in dem Fall, daß unterschiedliche Fluiddrücke an den Fluidanschlüssen auf das Ventilglied zusätzlich eine Differenzdruckkraft ausüben, zunächst ein Druckausgleichsvorgang zwischen den Fluidanschlüssen ausgelöst, wodurch die Druckdifferenzkraft eliminiert wird, so daß die Druckdifferenzkraft beim Herstellen der primären Strömungsverbindung nicht mehr wirksam ist und sich nicht mehr nachteilig auswirken kann. Es ist also nur eine verhältnismäßig geringe Betätigungskraft erforderlich, wodurch sich die Betätigungseinrichtung kostengünstig, mit einem geringen Aufwand sowie wenig Einbauraum benötigend ausführen läßt. Dadurch kann der durch die primäre Strömungsverbindung hauptsächlich bestimmte Strömungsquerschnitt verhältnismäßig großzügig dimensioniert werden, um eine unerwünschte Drosselwirkung im Durchströmverhalten der Ventilanordnung auszuschließen. Da die sekundäre Strömungsverbindung im Vergleich zu der primären Strömungsverbindung nur einen geringen Strömungsquerschnitt aufweist, ist die beim Herstellen der sekundären Strömungsverbindung zu überwindende Druckdifferenzkraft vernachläßigbar gering.

### Vorteilhafte Weiterbildungen

Vorteilhaft ist die blockiergeschützte Bremsanlage derart weitergebildet, daß die erste Ventilanordnung in einer weiteren betätigten Stellung eine sekundäre Strömungsverbindung zwischen der Bremsdruckgebereinheit und dem Eingangsanschluß der Pumpe herstellt, wobei die sekundäre Strömungsverbindung einen kleineren Strömungsquerschnitt aufweist als die primäre Strömungsverbindung, und während einer Betriebsphase "weiteren Druck aufbauen" die erste Ventilanordnung in der weiteren betätigten Stellung ist, während das erste Elektromagnetventil in der betätigten Stellung sowie das zweite und dritte Elektromagnetventil jeweils in der unbetätigten Stellung sind. Somit lassen sich die oben beschriebenen weiteren Vorteile der Erfindung und damit ein genau abgestimmter Druckaufbau an der Radbremse erzielen.

Eine vorteilhafte Ausgestaltung der Erfindung sieht vor, daß während einer Betriebsphase "weiteren Druck halten" das dritte Elektromagnetventil in der unbetätigten Stellung ist, während das erste Elektromagnetventil in der betätigten Stellung ist sowie die erste Ventilanordnung und das zweite Elektromagnetventil jeweils in der unbetätigten Stellung sind. Bei der der Betriebsphase "weiteren Druck halten" vorhergehenden Betriebsphase "weiteren Druck aufbauen" ist das dritte Elektromagnetventil geschlossen und die Ventilanordnung nur gedrosselt geöffnet worden. Die Pumpe hat dadurch am Eingangsanschluß einen starken Sog erzeugt, so daß bei Beginn der Betriebsphase "weiteren Druck halten" an ihrem Eingangsanschluß kein Fluidvolumen ansteht, das durch die Pumpe gefördert und den Druck an der Radbremse ungewollt erhöhen könnte. Zu Beginn der Betriebsphase "weiteren Druck halten" wird daher erfindungsgemäß auf das Betätigen des dritten Elektroventils verzichtet, um Schaltgeräusche zu verringern.

Vorteilhaft kann die blockiergeschützte Bremsanlage derart weitergebildet sein, daß während einer Betriebsphase "weiteren Druck abbauen" das dritte Elektromagnetventil in der unbetätigten Stellung ist, während das erste und zweite Elektromagnetventil jeweils in der betätigten Stellung sind sowie die erste Ventilanordnung in der unbetätigten Stellung ist. Entgegen der oben beschriebenen Betriebsphase "Druck abbauen", bei der das dritte Elektromagnetventil betätigt - also gesperrt - ist, kann während der Betriebsphase "weiteren Druck abbauen" erfindungsgemäß das dritte Elektromagnetventil unbetätigt bleiben. Dies ist möglich, da bereits während einer Betriebsphase "weiteren Druck halten" ein Druckausgleich vom Ausgangsanschluß der Pumpe durch das geöffnete dritte Elektromagnetventil bis zur Radbremse stattgefunden hat und beim Öffnen des zweiten Elektromagnetventils zu Beginn der Betriebsphase "weiteren Druck abbauen" Bremsfluid ausschließlich in den Speicher abfließt. Ein kontrollierter Druckabbau ist dadurch gewährleistet und gleichzeitig sind Schaltgeräusche erneut verringert.

In einer blockergeschützten Bremsanlage, die nicht Gegenstand der Erfindung ist, weist die Ventilanordnung ein erstes Ventilglied auf, das durch eine Federanordnung in die (Grund-)Stellung vorgespannt ist, wobei eine erste Betätigungseinrichtung vorgesehen ist, um das Ventilglied in die erste Betätigungsstellung zu bringen, und ein weiteres Ventilglied vorgesehen ist, das durch eine weitere Federanordnung in die (Grund-)Stellung vorgespannt ist, und durch eine weitere Betätigungseinrichtung in die zweite Betätigungsstellung bringbar ist, so daß bei einer Betätigung der Ventilanordnung zuerst nur in die sekundäre Strömungsverbindung und anschließend die primäre Strömungsverbindung besteht.

Die Betätigungseinrichtung und/oder die weitere Betätigungseinrichtung können in dieser Bremsanlage elektromagnetisch und/oder hydraulisch gesteuert werden. So kann in besonderer Weise die Betätigungseinrichtung, die das Ventilglied zur Herstellung der primären Strömungsverbindung betätigt, elektromagnetisch und die weitere Betätigungseinrichtung, die das weitere Ventilglied zur Herstellung der sekundären Strömungsverbindung betätigt, hydraulisch gesteuert werden. Dabei kann die weitere hydraulisch betätigte Betätigungseinrichtung über die zwischen den Fluidanschlüssen bestehende Druckdifferenz gesteuert werden, um die sekundäre Strömungsverbindung zwecks Auslösung des Druckausgleichsvorgangs zwischen den Fluidanschlüssen herzustellen. Wenn nach Eliminierung der Druckdifferenzkraft von der elektromagnetisch betätigten Betätigungseinrichtung die primäre Strömungsverbindung hergestellt wird, ist ebenfalls nur eine verhältnismäßig geringe Betätigungskraft aufzubringen. Dies wirkt sich besonders vorteilhaft auf die Auslegung der Elektromagnetanordnung der Betätigungseinrichtung aus, da die aufzubringende elektromagnetische Kraft verhältnismäßig gering ist, was zum einen eine energiesparende und somit kostengünstige Stromaufnahme bedeutet, und zum anderen eine einbauraumsparende Ausführung der Komponenten des Magnetkreises, vor allem der Spule und des Ankers, möglich macht.

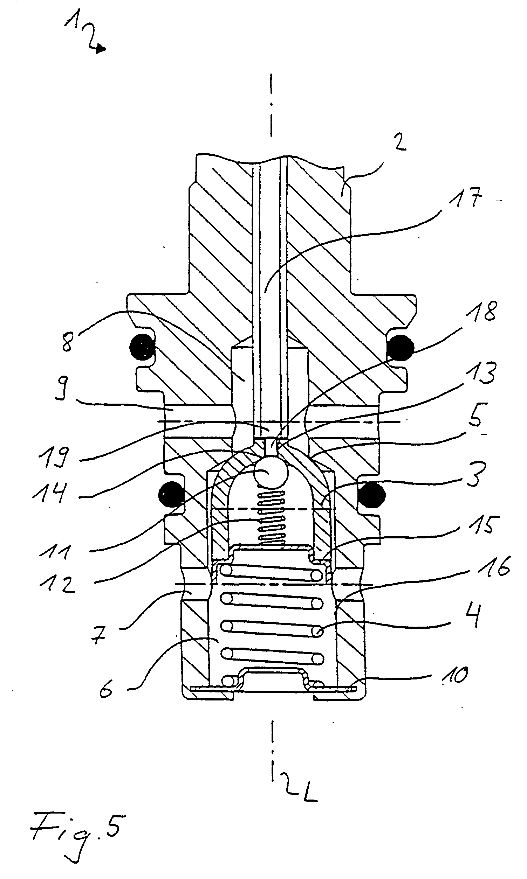

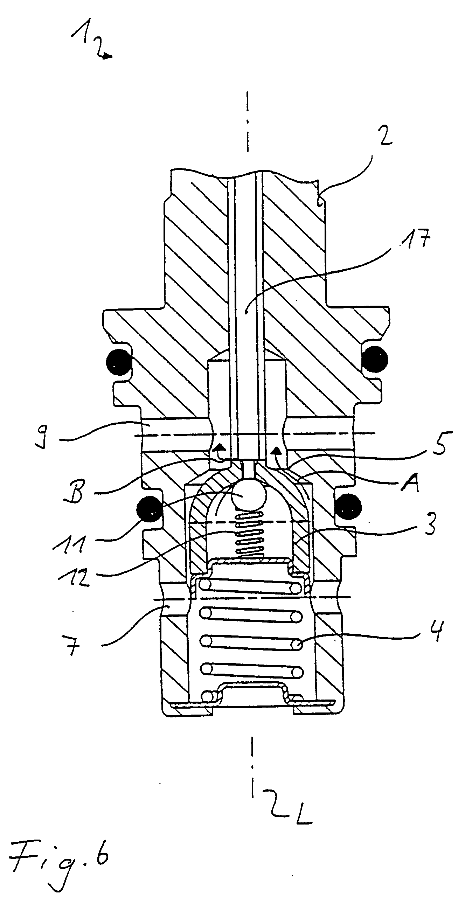

Besonders geeignet zur Verwendung als das zwischen der Bremsdruckgebereinheit und Eingangsseite der Pumpe eingesetzte Zwei-Anschluß-/Drei-Stellungsventil in einer derartigen Bremsanlage ist die Ventilanordnung, die in Fig. 5 im unbetätigten und in Fig. 6 im betätigten Zustand dargestellt ist. Für die Anwendung hier wird die Ventilanordnung nun so bestromt, daß bei einem ersten Strom zur Herstellung der ersten Betätigungsstellung nur das weitere Ventilglied betätigt wird (sekundäre Strömungsverbindung B), und daß bei einem zweiten Strom zur Herstellung der zweiten Betätigungsstellung weiterhin das Ventilglied betätigt wird (primäre Strömungsverbindung A).

Sowohl das Ventilglied als auch das weitere Ventilglied kann durch eine gemeinsame Betätigungseinrichtung betätigt werden. Insbesondere kann dabei die gemeinsame Betätigungseinrichtung aufgrund der zuvor dargelegten Vorteile elektromagnetisch gesteuert werden. Dabei kann die Betätigungseinrichtung einen zweistufigen Stößel aufweisen, der in Abhängigkeit von dem die Betätigungseinrichtung bewegenden Anker in einer ersten Stufe nur das weitere Ventilglied betätigt, um zunächst die sekundäre Strömungsverbindung herzustellen, und anschließend in einer zweiten Stufe auch oder nur das Ventilglied zu betätigen, das die primäre Strömungsverbindung herstellt, die das Durchströmverhalten der Ventilanordnung charakterisiert. Weiterhin werden durch die gemeinsame Betätigungseinrichtung eine Betätigungseinrichtung eingespart, demzufolge sich Komponenten und Kosten eingesparen lassen, und sich auch eine kompakte Bauweise der Ventilanordnung ergibt.

Das Ventilglied kann domförmig und das weitere Ventilglied kugelförmig ausgebildet sein, wobei das weitere Ventilglied innerhalb des Ventilglieds angeordnet ist, wodurch sich die Ventilanordnung besonders einbauraumsparend gestalten läßt.

Die Vorspannkraft der Federanordnung kann größer sein als die Vorspannkraft der weiteren Federanordnung. Dadurch ist die Betätigungskraft zur Herstellung der sekundären Strömungsverbindung, die von der Vorspannkraft der weiteren Federanordnung abhängt, besonders gering, vor allem wenn unterschiedliche Fluiddrücke an den Fluidanschlüssen anstehen. Außerdem kann sich die weitere Federanordnung über die Federanordnung abstützen, um eine einfache und einbauraumsparende Ausführung der Ventilanordnung zu erzielen.

Unter den Aspekten Einfachheit und Einsparung von Einbauraum ist es von Vorteil, wenn die primäre Strömungsverbindung von einem am Gehäuse der Ventilanordnung ausgestalteten Dichtsitz und dem Ventilglied bestimmt wird. Selbiges gilt, wenn die sekundäre Strömungsverbindung von einem an dem Ventilglied ausgestalteten Dichtsitz und dem weiteren Ventilglied gebildet wird.

Da die Kräftebilanz, einerseits unter der von der Betätigungseinrichtung aufzubringenden Betätigungskraft, andererseits unter der von der Federanordnung aufzubringenden Vorspannkraft und fallweise von der Druckdifferenzkraft zwischen den Fluidanschlüssen der Ventilanordnung bestimmt ist, kann sich hinsichtlich Einfachheit und Einsparung von Einbauraum die Federanordnung an dem Gehäuse der Ventilanordnung abstützen. Der gleiche Vorteil besteht, wenn sich die weitere Federanordnung über das Ventilglied abstützt.

Eine Alternative ist, wenn das weitere Ventilglied einstückig mit der Betätigungseinrichtung verbunden ist, wodurch sich Komponenten der Ventilanordnung einsparen bzw. einfacher herstellen lassen. Dabei kann, um die Ventilanordnung noch kompakter zu gestalten, vorgesehen werden, daß die weitere Federanordnung die Betätigungseinrichtung vorspannt, damit das weitere Ventilglied seine erste Stellung einnimmt, wobei die weitere Federanordnung sich an dem Gehäuse der Ventilanordnung abstützt.

Die Ventilanordnung ist in einer blockiergeschützten Bremsanlage zu verwenden, die zur Antriebsschlupf- sowie Fahrdynamikregelung eingerichtet ist, und dazu eine Pumpe aufweist, die Bremsfluid von einer Bremsdruckgebereinheit entnimmt, um mit dem Bremsfluid eine Radbremse zu versorgen, wobei der erste Fluidanschluß der Ventilanordnung an die Bremsdruckgebereinheit und der zweite Fluidanschluß der Ventilanordnung an die Eingangsseite der Pumpe angeschlossen ist. Aufgrund der Verwendung der Ventilanordnung ergibt sich hierbei der große Vorteil, daß zum einen ein verhältnismäßig großer Strömungsquerschnitt von der Bremsdruckgebereinheit zur Eingangsseite der Pumpe bereitgestellt wird, so daß die Pumpe vor allem bei niedrigen Temperaturen, also wenn sich das Bremsfluid zähflüssig verhält, einen verhältnismäßig großen Volumenstrom fördern kann. Zum anderen ist nur eine verhältnismäßig geringe Betätigungskraft aufzubringen, wenn die Ventilanordnung seitens der Bremsdruckgebereinheit druckbeaufschlagt wird, was bei einer Betätigung der Bremsdruckgebereinheit über das Bremspedal durch den Fahrer oder bei einer automatischen Betätigung der Bremsdruckgebereinheit zur Vorladung der Pumpe der Fall ist.

### Kurzbeschreibung der Zeichnungen

Die Erfindung und weitere vorteilhafte Ausgestaltungen werden nachfolgend anhand der Zeichnungen erläutert.
Fig. 1 zeigt eine schematische Darstellung einer erfindungsgemäßen blockiergeschützten Fahrzeugbremsanlage in einer ersten Ausführungsform.
Fig. 2 zeigt eine schematische Darstellung des Drucks an einer Radbremse während verschiedener Betriebsphasen und die zugehörigen Stellungen einer Ventilanordnung und von Elektromagnetventilen der in Fig. 1 dargestellten Fahrzeugbremsanlage.
Fig. 3 zeigt eine schematische Darstellung einer blockiergeschützten Fahrzeugbremsanlage, die nicht Gegenstand der Erfindung ist.
Fig. 4 zeigt eine schematische Darstellung des Drucks an einer Radbremse während verschiedener Betriebsphasen und die zugehörigen Stellungen einer Ventilanordnung und von Elektromagnetventilen der in Fig. 3 dargestellten Fahrzeugbremsanlage.
Fig. 5 zeigt eine Ventilanordnung zur Verwendung in der blockiergeschützten Fahrzeugbremsanlage nach Fig. 3 im unbetätigten Zustand.
Fig. 6 zeigt eine Ventilanordnung zur Verwendung in der blockiergeschützten Fahrzeugbremsanlage nach Fig. 3 im betätigten Zustand.

### Detaillierte Beschreibung des Ausführungsbeispiels

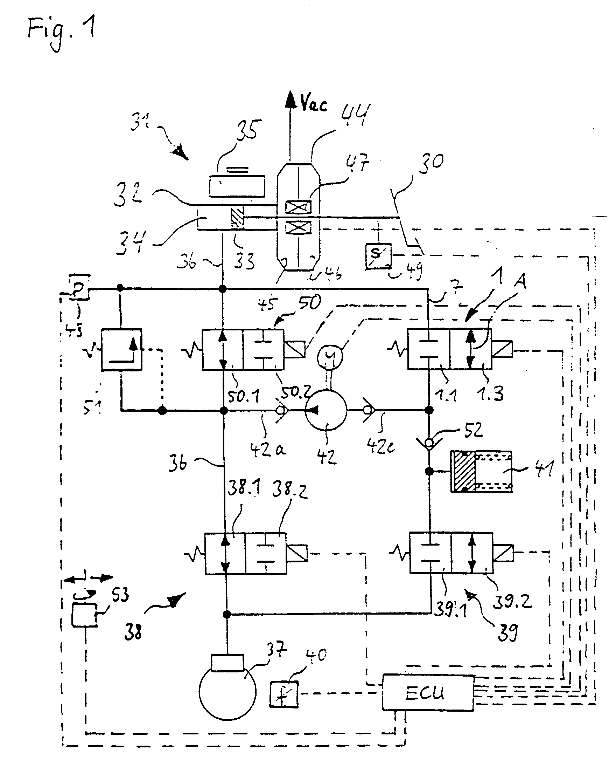

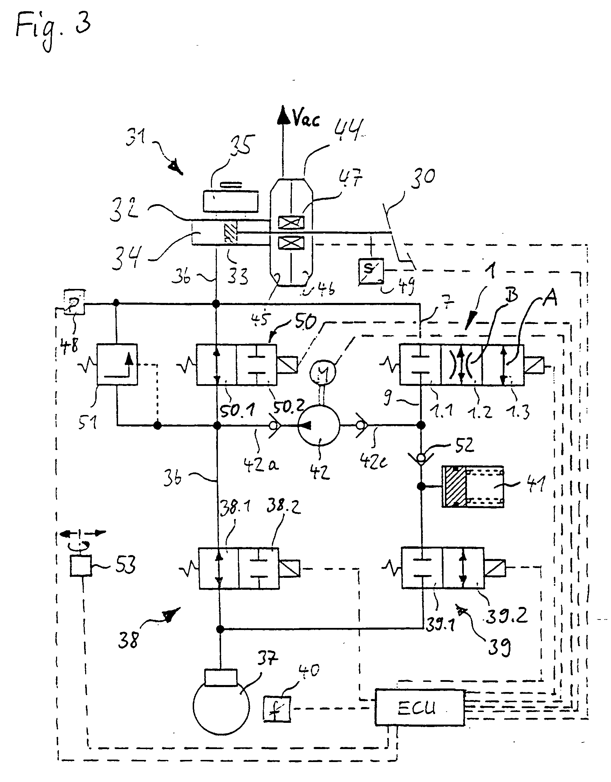

In Fig. 1 und 3 ist eine blockiergeschützte Bremsanlage für Kraftfahrzeuge schematisch dargestellt. Ein Bremspedal 30 dient dazu über ein Betätigungselement eine Bremsdruckgebereinheit 31 zu betätigen. Die Bremsdruckgebereinheit 31 weist einen Bremszylinder 32 auf, in dem ein Kolben 33 eine Druckkammer 34 bildet. Die Druckkammer 34 wird von einem Reservoir 35 mit Bremsfluid gespeist.

Von der Druckkammer 35 führt eine Bremsleitung 36 zu einer Radbremse 37 des Kraftfahrzeugs.

In der Bremsleitung 36 ist eine Ventileinrichtung 38, 39 zwischen der Bremsdruckgebereinheit 31 und der Radbremse 37 angeordnet. Die Ventileinrichtung 38, 39 ist aus zwei Elektromagnetventilen gebildet, die jeweils durch eine elektronische Steuereinheit ECU angesteuert werden, um den Druck in der Radbremse 37 zu modulieren. Dazu erfaßt die elektronische Steuereinheit ECU über einen Sensor 40 das Drehverhalten des der Radbremse 37 zugeordneten Fahrzeugrades, um durch entsprechende Ansteuerung der Elektromagnetventile 38, 39 Druckaufbau-, Druckabbau- sowie Druckhaltephasen einzustellen.

Im elektrisch unbetätigten Zustand nimmt das Elektromagnetventil 38 seine geöffnete Stellung 38.1 und das Elektromagnetventil 39 seine gesperrte Stellung 39.1 ein, um in der Radbremse 37 Druck aufbauen zu können. Wenn nur das Elektromagnetventil 38 betätigt wird, geht das Elektromagnetventil 38 in seine abgesperrte Stellung 38.2 und das zweite Elektromagnetventil 39 bleibt in seiner gesperrten Stellung 39.1, so daß der Druck in der Radbremse 37 konstant gehalten wird. Werden beide Elektromagnetventile 38, 39 betätigt, geht das Elektromagnetventil 38 in seine gesperrte Stellung 38.2 und das Elektromagnetventil 39 in seine geöffnete Stellung 39.2. In diesem Fall kann Bremsfluid aus der Radbremse 37 über das zweite Elektromagnetventil 39 in einen Zwischenspeicher 41 abfließen. Über eine Hydraulikpumpe 42 wird das in dem Zwischenspeicher 41 befindliche Bremsfluid in die Bremsleitung 36 zurückgefördert. Die Hydraulikpumpe 42 wird durch einen Elektromotor 43 angetrieben, der ebenfalls von der elektronischen Steuereinheit ECU angesteuert wird. Die Ventileinrichtung 38, 39 kann auch mit einem mechanischen Mengenregelventil anstelle des Elektromagnetventils 38 oder mit einem elektromagnetisch betätigtem Drei-Anschluß-/Zwei-Stellungs- oder Drei-Anschluß/Drei-Stellungsventil anstelle der beiden Elektromagnetventile 38, 39 ausgestaltet sein.

Die Bremsdruckgebereinheit 31 weist zur Verstärkung der über das Bremspedal 30 eingeleiteten Betätigungskraft einen pneumatischen Bremskraftverstärker 44 auf. Eine bewegliche Wand unterteilt den pneumatischen Bremskraftverstärker 44 in eine Unterdruckkammer 45 und eine Druckkammer 46. Zur Erzeugung des Unterdrucks ist die Unterdruckkammer 45 an eine nicht näher dargestellte Unterdruckquelle Vac angeschlossen. Bei einem mit einem Ottomotor ausgerüsteten Kraftfahrzeug steht das im Ansaugrohr prinzipbedingt erzeugte Vakuum als Unterdruckquelle Vac zur Verfügung. Dagegen ist bei einem mit einem Diesel- oder Elektromotor angetriebenen Kraftfahrzeug eine zusätzliche Vakuumpumpe als Unterdruckquelle Vac notwendig. Bei einer Betätigung des Bremspedals 30 funktioniert der Bremskraftverstärkers 44 in bekannter Weise dadurch, daß die Druckkammer 46 mit Atmosphärendruck beaufschlagt wird, so daß an der beweglichen Wand eine Druckdifferenz wirkt, die die am Bremspedal 30 eingeleitete Betätigungskraft unterstützt. Im unbetätigten Zustand sind die Unterdruckkammer 45 und die Druckkammer 46 miteinander verbunden und somit druckausgeglichen, so daß an der beweglichen Wand keine Druckdifferenz wirksam ist.

Der Bremskraftverstärker 44 kann über eine Elektromagnetanordnung 47 auch elektrisch steuerbar sein. Die Elektromagnetanordnung 47 betätigt ein hier nicht näher dargestelltes Steuerventil, um den Bremskraftverstärker 44 in unterschiedliche Steuerstellungen zu bringen. Erstens in eine erste sogenannte Aufbaustellung, in der die Verbindung der Unterdruckkammer 45 mit der Druckkammer 46 gesperrt und die Verbindung der Druckkammer 46 zur Atmosphäre geöffnet ist, so daß an der beweglichen Wand eine Druckdifferenz aufgebaut bzw. erhöht wird. Oder zweitens in eine zweite sogenannte Haltestellung, in der die Verbindung der Unterdruckkammer 45 mit der Druckkammer 46 und die Verbindung der Druckkammer 46 zur Atmosphäre gesperrt ist, so daß eine an der beweglichen Wand wirkende Druckdifferenz aufrechterhalten wird. Oder drittens in eine dritte sogenannte Abbaustellung, in der die Verbindung der Unterdruckkammer 45 mit der Druckkammer 46 geöffnet und die Verbindung der Druckkammer 46 zur Atmosphäre gesperrt ist, so daß über einen Druckausgleichsvorgang eine an der beweglichen Wand wirkende Druckdifferenz abgebaut wird. Um das Steuerventil in die unterschiedlichen Steuerstellungen zu bringen, bestromt die elektronische Steuereinheit ECU die Elektromagnetanordnung 47 mit einem Strom in der Weise, daß die Einstellung der vorgenannten Steuerstellungen beispielsweise durch Pulsweitenmodulation des Stromsignals erfolgt. Der in der Druckkammer 46 erzeugte und in die Bremsleitung 36 eingeleitete Bremsdruck wird mittels eines Sensors 48 erfaßt und an die elektronische Steuereinheit ECU weitergeleitet, um den Bremsdruck in Abhängigkeit von einem gewünschten Druckwert und/oder Druckverlauf zu regeln.

Die elektrische Steuerbarkeit des Bremskraftverstärkers 44 ermöglicht es Bremsvorgänge auch automatisch, also unabhängig von einer Betätigung des Bremspedals 30 auszuführen, was beispielsweise bei Ausführung einer Abstandsregelung oder einer Fahrstabilitätsregelung der Fall ist. Eine Sensoreinrichtung 49 ist vorgesehen, um mit der Betätigung des Bremspedals 30 in Beziehung stehende Größen (Pedalweg, Pedalkraft, Pedalbetätigungsgeschwindigkeit) zur Auswertung in der elektronischen Steuereinheit ECU zu erfassen, um auch Bremsungen in Notsituationen, beispielsweise mit der Überschreitung einer bestimmten Pedalbetätigungsgeschwindigkeit als Kriterium, auszuführen.

Ferner ist eine Sensoreinrichtung 53 vorgesehen, die Größen erfaßt, welche mit der Fahrstabilität des Fahrzeugs (Beschleunigung des Fahrzeugs in der Geradeausrichtung, Drehrate des Fahrzeugs um dessen Hochachse) in Beziehung stehen. Diese Größen werden ebenfalls an die elektronische Steuereinheit ECU geleitet, die damit einen erforderlichen Bremseingriff an einzelnen Radbremsen 37 anzusteuern vermag.

Die in Fig. 1 und 3 gezeigte blockiergeschützte Bremsanlage ist insbesondere auch zur Antriebsschlupf- sowie Fahrstabilitätsregelung eingerichtet, wobei insbesondere die Ventilanordnung gemäß den Fig. 5, 6 zur Verwendung kommt.

Der erste Fluidanschluß 7 der Ventilanordnung 1 ist an die Bremsdruckgebereinheit 31 und der zweite Fluidanschluß 9 der Ventilanordnung 1 ist an die Eingangsseite 42e der Pumpe 42 angeschlossen. Hierbei ist die erfindungsgemäße Ventilanordnung 1 elektromagnetisch betätigbar ausgeführt und wird von der elektronischen Steuereinheit ECU angesteuert. Dazu ist, wie bekannt und daher nicht dargestellt, die Betätigungseinrichtung 17 mit einem Anker betrieblich gekoppelt, der mit einer Elektromagnetanordnung zusammenwirkt.

Parallel zu der Ventilanordnung 1 ist in der Bremsleitung 36 zwischen der Bremsdruckgebereinheit 31 und der Ausgangsseite 42a der Pumpe 42 ein von der elektronischen Steuereinheit ECU angesteuertes Elektromagnetventil 50 angeordnet, das im unbetätigten Zustand 50.1 die Verbindung zwischen der Bremsdruckgebereinheit 31 und der Radbremse 37 herstellt und diese im betätigten Zustand 50.2 sperrt, so daß die Ausgangsseite 42a der Pumpe 42 nur mit der Radbremse 37 in Verbindung steht. Die Ventilanordnung 1 und das Elektromagnetventil 50 werden von der elektronischen Steuereinheit ECU angesteuert, um die Bremsdruckgebereinheit 31 entweder mit der Radbremse 37 oder der Saugseite 42e der Pumpe 42 zu verbinden. Zu dem Elektromagnetventil 50 ist ein Druckbegrenzungsventil 51 parallel geschaltet, das bei Überschreitung eines bestimmten Druckwertes in der Radbremse 37 bzw. an der Ausgangsseite 42a der Pumpe 42 eine Verbindung von der Radbremse 37 bzw. der Ausgangsseite 42a der Pumpe 42 zu der Bremsdruckgebereinheit 31 herstellt, um Beschädigungen an der Bremsanlage zu vermeiden.

Ein Rückschlagventil 52 ist zwischen dem Zwischenspeicher 41 und der Eingangsseite 42e der Pumpe 42 angeordnet, so daß eine Strömungsverbindung nur in Richtung von dem Zwischenspeicher 41 zu der Saugseite 42e der Pumpe 42 herstellbar ist. Damit wird verhindert, daß bei einer Vorladung der Eingangsseite 42e der Pumpe 42, wozu die Ventilanordnung 1 betätigt ist, Bremsfluid in den Zwischenspeicher 41 entweichen kann.

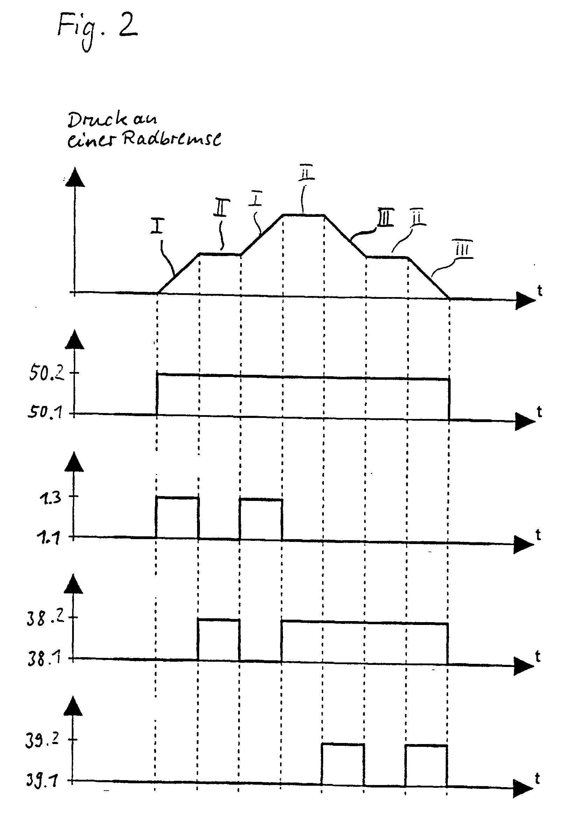

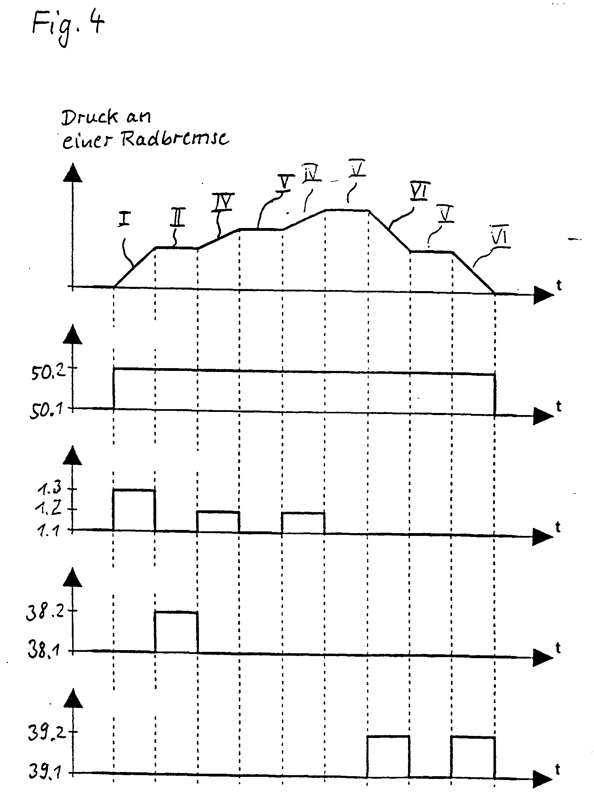

Bei einer Antriebsschlupfregelung, also wenn die elektronische Steuereinheit ECU eine Durchdrehtendenz des der Radbremse 37 zugeordneten Rades feststellt, werden die Ventilanordnungen 1 und das Elektromagnetventil 50 betätigt. Die Ventilandordnung 1 befindet sich dann in der Stellung 1.3, das Elektromagnetventil in der Stellung 50.2. Da bei einer Antriebsschlupfregelung eine Betätigung des Bremspedals 30 nicht erfolgt, kann die Pumpe 42 Bremsfluid aus dem Reservoir 35 über die Druckkammer 34 und die Ventilanordnung 1 entnehmen und, da das Elektromagentventil 50 die Verbindung zur Bremsdruckgebereinheit 31 sperrt, mit diesem Bremsfluid unmittelbar die Radbremse 37 beaufschlagen, um der Durchdrehtendenz entgegenzuwirken. Damit ist die in Fig. 2 und 4 mit I bezeichnete Betriebsphase "Druck aufbauen" eingeleitet. Vorteilhaft ist hierbei, daß die erfindungsgemäße Ventilanordnung 1 einen verhältnismäßig großen Strömungsquerschnitt A freigibt, so daß die Pumpe 13 insbesondere bei tiefen Temperaturen einen ausreichend großen Volumenstrom fördern kann.

Demgegenüber kann bei einer Fahrstabilitätsregelung, bei der die Fahrzeugstabilität inbesondere beim Fahren in einer Kurve durch automatisches Bremsen verbessert wird, zusätzlich die Eingangsseite 42e der Pumpe 42 mit einem von der Bremsdruckgebereinheit 31 erzeugten Bremdruck vorgeladen werden, um einen sehr schnellen Druckaufbau in der Radbremse 37 zu erzielen. Dies geschieht durch automatische Ansteuerung des Bremskraftverstärkers 44, wozu in der Druckkammer 34 der Bremsdruckgebereinheit 31 ein Druck in der Größenordnung von 5 bis 30 bar eingestellt wird, was unter anderem von der Beschaffenheit der Oberfläche der Fahrbahn abhängig ist. Durch das Vorladen der Pumpe 42 über deren Saugseite 42e wird erreicht, daß bereits während der Anlaufphase an der Ausgangsseite 42a der Pumpe 7 ein ausreichendender Druck zur Verfügung steht. Aufgrund der erfindungsgemäßen Ausgestaltung der Ventilanordnung 1 ergeben sich hierbei keinerlei Nachteile, wenn die Ventilanordnung 1 gegen den von der Bremsdruckgebereinheit 31 erzeugten Druck betätigt wird. Auch ergeben sich erfindungsgemäß keine Einschränkungen bei der Bemessung des Strömungsquerschnitts der Ventilanordnung 1, so daß insbesondere das sehr gute Tieftemperaturverhalten aufrechterhalten bleibt.

Es versteht sich, daß die vorbeschriebene Vorladung der Pumpe 42 gleichfalls bei einer Antriebsschlupfregelung anwendbar ist. Ebenso versteht es sich, daß bei Einsatz einer besonders saugstark ausgebildeten Pumpe keine Vorladung wie vorstehend unter Einsatz des elektrisch steuerbaren Bremskraftverstärkers beschrieben, notwendig ist, also ein elektrisch steuerbarer Bremskraftverstärker nicht notwendigerweise erforderlich ist.

Bei der in Fig. 1 dargestellten Ausführungsform ist als Ventilanordnung 1 ein Zwei-Anschluß-/Zwei-Stellungsventil vorgesehen. Die Ventilanordnung 1 wird dabei derart angesteuert, daß sie während der oben beschriebenen Betriebsphase I "Druck aufbauen" (siehe Fig. 2) mit dem Elektromagnetventil 50 betätigt ist. Die Pumpe 42 fördert dabei Bremsfluid aus der Bremsdruckgebereinheit 31 durch das offene Elektromagnetventil 38 zur Radbremse 37.

Während einer anschließenden Betriebsphase II "Druck halten" wird die Ventilanordnung 1 geschlossen, so daß der Pumpe 42 durch ihren Eingangsanschluß 42e kein weiteres Bremsfluid zugeführt wird. Um zu verhindern, daß restliches am Eingangsanschluß 42e anstehendes Bremsfluid durch die Pumpe 42 zur Radbremse 37 gefördert wird, ist das Elektromagnetventil 38 während der Betriebsphase II "Druck halten" betätigt, also geschlossen.

Derartige Betriebsphasen können sich bis zu einer Betriebsphase III " Druck abbauen" mehrmals wiederholen. Während der Betriebsphase III "Druck abbauen" (siehe Fig. 2) sind beide Elektromagnetventile 38 und 39 betätigt, so daß Bremsfluid von der Radbremse 37 in den Speicher 41 abfließen kann. Gleichzeitig sind das Elektromagnetventil 50 betätigt - also gesperrt - und die Ventilanordnung 1 unbetätigt - also ebenfalls gesperrt. Der Druckabbau wird daher ausschließlich durch den Speicher 41 bestimmt.

Bei der in Fig. 3 dargestellten Bremsanlage ist als Ventilanordnung 1 ein Zwei-Anschluß-/Drei-Stellungsventil eingesetzt. Dieses Ventil weist in der primären Stellung 1.3 den Strömungsquerschnitt A auf, der größer als der sekundäre Strömungsquerschnitt B in der sekundären Stellung 1.2 ist. Während der Betriebsphase I "Druck aufbauen" (siehe Fig. 4) ist diese Ventilanordnung 1 analog zu der in Fig. 1 dargestellten Bremsanlage betätigt und öffnet mit dem großen Strömungsquerschnitt A. In der Betriebsphase II "Druck halten" (siehe Fig. 4) ist die Ventilanordnung 1 wie bei der Bremsanlage in Fig. 1 geschlossen.

Die Stellung der Ventilanordnung 1 in Fig. 3 wird jedoch während einer weiteren Betriebsphase IV "weiteren Druck aufbauen" nicht erneut mit dem großen Strömungsquerschnitt A, sondern mit dem kleineren Strömungsquerschnitt B geöffnet. Dadurch ist es möglich, den weiteren Druckaufbau feiner abzustimmen.

Bei einer anschließenden Betriebsphase V "weiteren Druck halten" steht vor dem Eingangsanschluß 42e der Pumpe 42, aufgrund der starken Drosselung des Bremsfluids während der Betriebsphase "weiteren Druck" aufbauen, kein Bremsfluid an, das von der Pumpe 42 gefördert werden könnte. Bei der Betriebsphase V "weiteren Druck halten" wird daher auf das Schließen des Elektromagnetventils 38 verzichtet, um Schaltgeräusche zu verringern.

Während nachfolgender Betriebsphasen VI "weiteren Druck abbauen" bleibt das Elektromagnetventil 38 ebenfalls unbetätigt, da bereits während einer Betriebsphase V "weiteren Druck halten" ein Druckausgleich vom Ausgangsanschluß 42a der Pumpe 42 durch die Bremsleitung 36 und das geöffnete Elektromagnetventil 38 bis zur Radbremse 37 stattgefunden hat, so daß beim Öffnen des Elektromagnetventils 39 zu Beginn der Betriebsphase VI "weiteren Druck abbauen" Bremsfluid ausschließlich in den Speicher 41 abfließt. Damit sind ein kontrollierter Druckabbau gewährleistet und gleichzeitig die Schaltgeräusche verringert.

In Fig. 5 und 6 ist eine Ausführungsform der in Fig. 3 dargestellten Ventilanordnung 1 jeweils in einem Längsschnitt gezeigt. Der Aufbau der Ventilanordnung 1 ist im wesentlichen rotationssymetrisch in Bezug auf eine Längsachse L.

Die Ventilanordnung 1 ist als 2-Anschluß-/3-Stellungsventil ausgestaltet, bei dem in einer unbetätigten (Grund-) Stellung 1.1 (siehe Fig. 3) die Verbindung zwischen den Fluidanschlüssen 7 und 9 der Ventilanordnung gesperrt ist. In einer ersten Betätigungsstellung 1.2 (siehe Fig. 3) wird eine sekundäre Strömungsverbindung B zwischen den Fluidanschlüssen 7 und 9 der Ventilanordnung hergestellt. In einer zweiten Betätigungsstellung 1.3 (siehe Fig. 3) wird eine primäre Strömungsverbindung A zwischen den Fluidanschlüssen 7 und 9 der Ventilanordnung 1 hergestellt. Dabei hat die primäre Strömungsverbindung (A) einen größeren Strömungsquerschnitt als die sekundäre Strömungsverbindung (B) (siehe Fig. 5). Die Ventilanordnung 1 hat ein erstes Ventilglied 3, das durch eine Federanordnung 4 in die Grundstellung 1.1 vorgespannt ist. Des weiteren ist eine erste Betätigungseinrichtung 17 vorgesehen, um das Ventilglied 3 in die erste Betätigungsstellung 1.2 zu bringen. Schließlich ist ein weiteres Ventilglied 11 vorgesehen, das durch eine weitere Federanordnung 12 in die Grundstellung 1.1 vorgespannt ist. Eine weitere Betätigungseinrichtung dient dazu, das weitere Ventilglied 11 in die zweite Betätigungsstellung 1.3 zu bringen, so daß bei einer Betätigung der Ventilanordnung 1 zuerst nur in die sekundäre Strömungsverbindung B und anschließend die primäre Strömungsverbindung A besteht. Wie dies im einzelnen erreicht wird, ist nachstehend erläutert.

Die Ventilanordnung 1 besteht aus einem Gehäuse 2, in dem ein Ventilglied 3 und eine Federanordnung 4 koaxial zu der Längsachse L aufgenommen sind. In dem Gehäuse 2 ist radial zu der Längsachse L ein Dichtsitz 5 ausgestaltet, mit dem das Ventilglied 3 derart zusammenwirkt, daß das Ventilglied 3 unter Krafteinwirkung der Federanordnung 4 gegen den Dichtsitz 5 dichtend vorgespannt ist, wie in Fig. 5 gezeigt. Dadurch werden eine erste Druckkammer 6, der ein erster Fluidanschluß 7 zugeordnet ist, und eine zweite Druckkammer 8, der ein zweiter Fluidanschluß 8 zugeordnet ist, gebildet. Zur Vorspannung des Ventilglieds 3 stützt sich die Federanordnung 4 über das Gehäuse 2 ab. Um die erste Druckkammer 8 zu verschließen, ist ein Verschlußteil 10 vorgesehen, das dichtend mit dem Gehäuse 2 verbunden ist, und an dem die Federanordnung 4 anliegt. Auch weist das Verschlußteil 10 eine zapfenförmige Einziehung zur Aufnahme der Federanordnung 4 auf, um für die Federanordnung 4 eine zu der Längsachse L axiale (innere) Führung bereitzustellen.

Das Ventilglied 3 ist domförmig ausgebildet, um auf seiner der ersten Druckkammer 6 zugewandten Seite ein weiteres Ventilglied 11, das kugelförmig ausgebildet ist, und eine weitere Federanordnung 12 koaxial zu der Längsachse L aufzunehmen. Das Ventilglied 3 weist koaxial zu der Längsachse L eine Zentralbohrung 13 auf. Auf der der ersten Druckkammer 6 zugewandten Seite der Zentralbohrung 13 ist an dem Ventilglied 3 radial zu der Längsachse L ein Dichtsitz 14 ausgestaltet, mit dem das weitere Ventilglied 11 derart zusammenwirkt, daß das weitere Ventilglied 11 unter Krafteinwirkung der weiteren Federanordnung 12 gegen den Dichtsitz 14 dichtend vorgespannt ist, so daß die erste und die zweite Druckkammer 6, 8 gegeneinander gesperrt sind, wie in Fig. 2 gezeigt. Dabei stützt sich zur Vorspannung des weiteren Ventilglieds 11 die weitere Federanordnung 12 über das Ventilglied 3 ab, wobei die weitere Federanordnung an einem Fluiddurchlässe aufweisenden Halteteil 15 anliegt, das kraftschlüssig mit dem Ventilglied 3, zum Beispiel über eine Preßpassung, verbunden ist. Da sich das Ventilglied 3 über die Federanordnung 4 an dem Gehäuse 2 abstützt, stützt sich die weitere Federanordnung 12 mittelbar an dem Gehäuse 2 ab, so daß das Halteteil 15 auch lose mit dem Ventilglied 3 verbunden sein kann. Das Halteteil 15 liegt zwischen dem Ventilglied 3 und der Federanordnung 4, und weist einen äußeren Rand auf, der die Federanordnung 4 radial umgreift, um somit für die Federanordnung 4 auch eine zu der Längsachse L axiale (äußere) Führung bereitzustellen.

Um eine sichere Funktion der Ventilanordnung 1 zu gewährleisten, ist eine paßgenaue und gleitreibungsarme axiale Führung des Ventilglieds 3 wichtig. Dazu kann einerseits das Ventilglied 3 in der Bohrung 16 des Gehäuses 2 unmittelbar geführt sein, andererseits kann die axiale Führung in der Bohrung 16 des Gehäuses 2 über den äußeren Rand des mit dem Ventilglied 3 verbundenen Halteteils 15 besorgt werden.

Zur Betätigung der Ventilanordnung 1 ist in dem Gehäuse 2 eine Betätigungseinrichtung 17 koaxial zu der Längsachse L aufgenommen. Die Betätigungseinrichtung 17 ist auf der dem Ventilglied 3 zugewandten Seite als stufenförmiger Stößel 18, 19 ausgebildet. Dabei weist der vordere Stößel 18 einen Durchmesser auf, der kleiner ist als der Durchmesser der Zentralbohrung 13, so daß der vordere Stößel 18 in der Zentralbohrung 13 das Ventilglied 3 durchdringt, um mit dem weiteren Ventilglied 11 zusammenzuwirken. Der Durchmesser des hinteren Stößels 19 ist größer als der Durchmesser der Zentralbohrung 13, so daß der hintere Stößel 19 mit dem Ventilglied 3 zusammenwirkt.

Ebenfalls kann das weitere Ventilglied 11 einstückig mit der Betätigungseinrichtung 17 bzw. dem Stößel 18 oder 19 verbunden sein, so daß die weitere Federanordnung 12 die Betätigungseinrichtung 17 vorspannen kann, wobei sich die weitere Federanordnung 12 unmittelbar an dem Gehäuse 2 abstützt. Bei dieser Ausführung wird zum einen das Halteteil 15 eingespart, zum anderen ergibt sich ein sehr kompakter Aufbau, da die weitere Federanordnung 12 in der Betätigungseinrichtung 17 integriert ist.

Bei dem in Fig. 5 gezeigten unbetätigten Zustand der Ventilanordnung 1 liegt das Ventilglied 3 unter Krafteinwirkung der Federanordnung 4 an dem Dichtsitz 5 an und das weitere Ventilglied 11 liegt unter Krafteinwirkung der weiteren Federanordnung 12 an dem Dichtsitz 14 an, wodurch die erste Druckkammer 6 bzw. der erste Fluidanschluß 7 gegenüber der zweiten Druckkammmer 8 bzw. dem zweiten Fluidanschluß 9 gesperrt ist. Dabei spannt die weitere Federanordnung 12 über das weitere Ventilglied 11 und über den vorderen Stößel 18 die Betätigungseinrichtung 17 in ihre unbetätigte Stellung vor. Der vordere Stößel 18 ist so bemessen, daß er zum einen mit der Zentralbohrung 13 einen radialen Spalt S_{R} bildet, und daß zum anderen zwischen dem hinteren Stößel 19 und dem Ventilglied 3 ein axialer Spalt S_{A} gebildet ist.

Erfolgt nun eine Betätigung der Ventilanordnung 1, wozu die Betätigungseinrichtung 17 in y-Richtung bewegt wird, so hebt der vordere Stößel 18 zunächst das weitere Ventilglied 11 entgegen der Kraft der weiteren Federanordnung 12 von dem Dichtsitz 14 ab, wodurch zwischen der ersten und der zweiten Druckkammer 6, 8 eine sekundäre Strömungsverbindung B hergestellt wird, die sich über den radialen Spalt S_{R}, den der vordere Stößel 18 in der Zentralbohrung 13 bildet, sowie über den axialen Spalt S_{A}, der zwischen dem Ventilglied 3 und dem hinteren Stößel 19 besteht, erstreckt. Da der radiale Spalt S_{R} und der axiale Spalt S_{A} verhältnismäßig groß bemessen sind, ist der wirksame Strömungsquerschnitt der sekundären Strömungsverbindung B effektiv durch den ringspaltförmigen Durchlaß zwischen dem weiteren Ventilglied 11 und dem Dichtsitz 14 bestimmt.

Wird nunmehr bei Betätigung der Ventilanordnung 1 die Betätigungseinrichtung 17 weiter in y-Richtung bewegt, so kommt nach Überschreitung des Maßes des axialen Spaltes S_{A} der hintere Stößel 19 an dem Ventilglied 3 zur Anlage, so daß dieses entgegen der Kraft der Federanordnung 4 von dem Dichtsitz 5 abgehoben wird, so daß eine primäre Strömungsverbindung A zwischen der ersten und der zweiten Druckkammer 6, 8 hergestellt wird, wobei der wirksame Strömungsquerschnitt der primären Strömungsverbindung A effektiv durch den ringspaltförmigen Durchlaß zwischen dem Ventilglied 3 und dem Dichtsitz 5 bestimmt ist. Dieser betätigte Zustand ist in Fig. 6 gezeigt. Da der Strömungsquerschnitt der sekundären Strömungsverbindung B im Vergleich zu dem Strömungsquerschnitt der primären Strömungsverbindung A vernachlässigbar ist, macht es keinen bedeutenden Unterschied, ob bei bestehender primären Strömungsverbindung A die sekundäre Strömungsverbindung B aufrechterhalten oder abgesperrt wird. Denn so kann die sekundäre Strömungsverbindung B bei Anliegen des hinteren Stößels 19 an dem Ventilglied 3 gesperrt oder durch geeignete Ausgestaltung des vorderen bzw. hinteren Stößels 18, 19 beispielsweise mit Querbohrungen aufrechterhalten werden.

Damit die sekundäre Strömungsverbindung B (zeitlich) vor der primären Strömungsverbindung A in der zuvor erläuterten Weise hergestellt wird, ist die Vorspannkraft der weiteren Federanordnung 12 kleiner als die Vorspannkraft der Federanordnung 4. Desweiteren ist der wirksame Strömungsquerschnitt der sekundären Strömungsverbindung B erheblich kleiner als der wirksame Strömungsquerschnitt der primären Strömungsverbindung A, da der ringspaltförmige Durchlaß zwischen dem Ventilglied 3 und dem Dichtsitz 5 aufgrund der zuvor erläuterten radialgeometrischen Anordnung größer ist als der ringspaltförmige Durchlaß zwischen dem weiteren Ventilglied 11 und dem Dichtsitz 14. Aufgrund dieser Dimensionierung der Ventilanordnung 1 ist seitens der Betätigungseinrichtung 17 zur Herstellung der sekundären Strömungsverbindung B nur eine verhältnismäßig geringe Betätigungskraft aufzubringen. Denn kraftmäßig ist zunächst nur die geringe Vorspannkraft der weiteren Federanordnung 12 und erst anschließend die Vorspannkraft der Federanordnung 4 zu überkommen.

In dem Fall, daß in der ersten Druckkammer 6 bzw. am ersten Fluidanschluß 7 ein höherer Druck als in der zweiten Druckkammer 8 bzw. am zweiten Fluidanschluß 9 ansteht, ist zunächst zusätzlich zu der Vorspannkraft der weiteren Federanordnung 12 eine Druckdifferenzkraft zu überkommen, die aber wegen des sehr kleinen wirksamen Strömungsquerschnitts der sekundären Strömungsverbindung B ebenfalls gering ist, so daß die aufzubringende Betätigungskraft gering bleibt. Allerdings findet über die sekundäre Strömungsverbindung B ein Druckausgleichsvorgang zwischen der ersten und der zweiten Druckkammer 6, 8 statt, wodurch die Druckdifferenzkraft (nahezu) vollständig abgebaut wird, so daß anschließend bei Herstellung der primären Strömungsverbindung A nur noch die Vorspannkraft der Federanordnung 4 zu überkommen ist. Würde entgegen dem die Druckdifferenz zwischen der ersten und der zweiten Druckkammer 6, 8 bei Herstellung der primären Strömungsverbindung A nach wie vor bestehen, so wäre aufgrund des sehr großen wirksamen Strömungsquerschnitts der primären Strömungsverbindung A zusätzlich eine sehr hohe Druckdifferenzkraft zu überkommen, was eine erhebliche Erhöhung der aufzubringenden Betätigungskraft zur Folge hätte.

Insgesamt ist zu der Ventilanordnung 1 also festzustellen, daß zwischen dem ersten und zweiten Fluidanschluß 7, 9 eine Strömungsverbindung mit einem sehr großen wirksamen Strömungsquerschnitt herstellbar ist, wobei im Verhältnis dazu die aufzubringende Betätigungskraft sehr gering ist.

Des weiteren kann bei Betätigung der Ventilanordnung 1 durch Einstellen der Betätigungskraft - über die Bestromung der hier nicht näher dargestellten elektromagnetischen Betätigungsrichtung - wahlweise entweder die primäre (A) oder sekundäre (B) Strömungsverbindung angewählt bzw. eingestellt werden. Dies ermöglicht zum Beispiel bei einer pulswertenmoduliert gesteuerten Bestromung eine sehr präzise Einstellung des Druckniveaus an der Eingangs- bzw. Ausgangsseite der Pumpe 42.

## Patentansprüche

1. Blockiergeschützte Bremsanlage für ein Landfahrzeug, die insbesondere zur Antriebsschlupf- sowie zur Fahrstabilitätsregelung eingerichtet ist, derart, daß eine Pumpe (42) zum Betätigen einer Radbremse (37) Bremsfluid von einer Bremsdruckgebereinheit (31) entnimmt und der Radbremse (37) zuführt, wobei
- in einer Verbindung zwischen der Bremsdruckgebereinheit (31) und einem Eingangsanschluß (42e) der Pumpe (42) eine erste Ventilanordnung (1) angeordnet ist, die
-- in einer unbetätigten Grundstellung (1.1) die Verbindung zwischen der Bremsdruckgebereinheit (31) und dem Eingangsanschluß (42e) der Pumpe (42) sperrt, und
-- in mindestens einer betätigten Stellung (1.3) eine primare Strömungsverbindung (A) zwischen der Bremsdruckgebereinneit (31) und dem Eingangsanschluß (42e) der Pumpe (42) herstellt,
- in einer Verbindung zwischen einem Ausgangsanschluß (42a) der Pumpe (42) und der Bremsdruckgebereinheit (31) ein erstes Elektromagnetventil (50) angeordnet ist, das in einer unbetätigten Grundstellung (50.1) die Verbindung zwischen dem Ausgangsanschluß (42a) der Pumpe (42) und der Bremsdruckgebereinheit (31) herstellt und in einer betätigten Stellung (50.2) sperrt,
- in einer Verbindung zwischen der Radbremse (37) und dem Eingangsanschluß (42e) der Pumpe (42) ein zweites Elektromagnetventil (39) angeordnet ist, das in einer unbetätigten Grundstellung (39.1) die Verbindung zwischen der Radbremse (37) und dem Eingangsanschluß (42e) der Pumpe (42) sperrt und in einer betätigten Stellung (39.2) herstellt, und
- in einer Verbindung zwischen dem Ausgangsanschluß (42a) der Pumpe (42) und der Radbremse (37) ein drittes Elektromagnetventil (38) angeordnet ist, das die Verbindung zwischen dem Ausgangsanschluß (42a) der Pumpe (42) und der Radbremse (37) in einer unbetätigten Stellung (38.1) herstellt und in einer betätigten Stellung (38.2) sperrt,
- wobei während einer Betriebsphase "Druck halten" (II) die erste Ventilanordnung (1) in der unbetätigten Stellung (1.1), das erste Elektromagnetventil (50) in der betätigten Stellung (50.2), das zweite Elektromagnetventil (39) in der unbetätigten Stellung (39.1),
- das dritte Elektromagnetventil (38) in der betätigten Stellung (38.2) ist, und
- während einer Betriebsphase "Druck abbauen" (III) die erste Ventilanordnung (1) in der unbetätigten Stellung (1.1) sowie das erste (50), zweite (39) und dritte Elektromagnetventil (38) in jeweils der betätigten Stellung (50.2; 39.2; 38.2) sind, **dadurch gekennzeichnet, daß**,
das Bremsfluid nur in einen Zwischenspeicher (41) abströmt.

2. Blockiergeschützte Bremsanlage nach Anspruch 1,
**dadurch gekennzeichnet, daß**
- die erste Ventilanordnung (1) in einer weiteren betätigten Stellung (1.2) eine sekundäre Strömungsverbindung (B) zwischen der Bremsdruckgebereinheit (31) und dem Eingangsanschluß (42e) der Pumpe (42) herstellt, wobei die sekundäre Strömungsverbindung (B) einen kleineren Strömungsquerschnitt aufweist als die primäre Strömungsverbindung (A), und
- die erste Ventilanordnung (1) während einer Betriebsphase "weiteren Druck aufbauen" (IV) in der weiteren betätigten Stellung (1.2) ist, während das erste Elektromagnetventil (50) in der betätigten Stellung (50.2) sowie das zweite (39) und dritte Elektromagnetventil (38) jeweils in der unbetätigten Stellung (39.1; 38.1) sind.

3. Blockiergeschützte Bremsanlage nach Anspruch 1 oder 2,
**dadurch gekennzeichnet, daß** das dritte Elektromagnetventil (38) während einer Betriebsphase "weiteren Druck halten" (V) in der unbetätigten Stellung (38.1) ist, während das erste Elektromagnetventil (50) in der betätigten Stellung (50.2) ist sowie die erste (1) Ventilanordnung und das zweite Elektromagnetventil (39) jeweils in der unbetätigten Stellung (1.1; 39.1) sind.

4. Blockiergeschützte Bremsanlage nach einem der Ansprüche 1 bis 3,
**dadurch gekennzeichnet, daß** das dritte Elektromagnetventil (38) während einer Betriebsphase "weiteren Druck abbauen" (VI) in der unbetätigten Stellung (38.1) ist, während das erste (50) und zweite Elektromagnetventil (39) jeweils in der betätigten Stellung (50.2; 39.2) sind sowie die erste Ventilanordnung (1) in der unbetätigten Stellung (1.1) ist.

## Claims

1. An anti-locking brake system for a land vehicle, which system is set up in particular for traction control and vehicle dynamics control in such a way that a pump (42) for actuating a wheel brake (37) removes brake fluid from a brake pressure generating unit (31) and supplies it to the wheel brake (37), wherein
- a first valve arrangement (1) is disposed in a connection between the brake pressure generating unit (31) and an input connection (42e) of the pump (42), which
-- in a non-actuated (normal) position (1.1) blocks the connection between the brake pressure generating unit (31) and the input connection (42e) of the pump (42) and,
-- in at least one actuated position (1.3) establishes a primary flow connection (A) between the brake pressure generating unit (31) and the input connection (42e) of the pump (42),
- a first electromagnetic valve (50) is arranged in a connection between an output connection (42a) of the pump (42) and the brake pressure generating unit (31), which, in a non-actuated normal position (50.1), establishes the connection between the output connection (42a) of the pump (42) and the brake pressure generating unit (31) and blocks it in an actuated position (50.2),
- a second electromagnetic valve (39) is arranged in a connection between the wheel brake (37) and the input connection (42e) of the pump (42), which, in a non-actuated normal position (39.1), blocks the connection between the wheel brake (37) and the input connection (42e) of the pump (42) and establishes it in an actuated position (39.2), and
- a third electromagnetic valve (38) is arranged in a connection between the output connection (42a) of the pump (42) and the wheel brake (37), which establishes the connection between the output connection (42a) of the pump (42) and the wheel brake (37) in a non-actuated position (38.1) and blocks it in an actuated position (38.2),
- wherein during an operating phase "maintain pressure" (II) the first valve arrangement (1) is in the non-actuated position (1.1), the first electromagnetic valve (50) is in the actuated position (50.2), the second electromagnetic valve (39) is in the non-actuated position (39.1),
- the third electromagnetic valve (38) is in the actuated position (38.2), and
- during an operating phase "reduce pressure" (III) the first valve arrangement (1) is in the non-actuated position (1.1) and the first (50), second (39) and third electromagnetic valves (38) are in the actuated position (50.2; 39.2; 38.2) each,
**characterized in that**
the brake fluid flows only into a temporary store (41).

2. The anti-locking brake system according to claim 1, **characterized in that**
- in a further actuated position (1.2) the first valve arrangement (1) establishes a secondary flow connection (B) between the brake pressure generating unit (31) and the input connection (42e) of the pump (42), the secondary flow connection (B) having a smaller flow cross section than the primary flow connection (A), and
- during an operating phase "build up further pressure" (IV) the first valve arrangement (1) is in the further operated position (1.2) while the first electromagnetic valve (50) is in the actuated position (50.2) and the second (39) and third electromagnetic valves (38) are in the non-actuated position (39.1; 38.1) each.

3. The anti-locking brake system according to claim 1 or 2, **characterized in that** during an operating phase "maintain further pressure" (V) the third electromagnetic valve (38) is in the non-actuated position (38.1) while the first electromagnetic valve (50) is in the actuated position (50.2) and the first (1) valve arrangement and the second electromagnetic valve (39) are in the non-actuated position (1.1; 39.1) each.

4. The anti-locking brake system according to one of claims 1 to 3, **characterized in that** during an operating phase "reduce further pressure" (VI) the third electromagnetic valve (38) is in the non-actuated position (38.1), while the first (50) and second electromagnetic valves (39) are in the actuated position (50.2; 39.2) each and the first valve arrangement (1) is in the non-actuated position (1.1).

## Revendications

1. Système de freinage antiblocage pour véhicule terrestre, agencé en particulier pour le réglage de l'antipatinage à l'accélération ainsi que de la stabilité de marche, une pompe (42) prélevant du fluide de frein d'une unité de transmission de pression de freinage (31) pour l'actionnement d'un frein de roue (37) et amenant ce fluide au frein sur roue (37), système dans lequel :
- un premier dispositif de soupape (1) est inséré dans une conduite entre l'unité de transmission de pression de freinage (31) et un raccord d'entrée (42e) de la pompe (42), ce premier dispositif de soupape
-- bloquant dans une position de base inactive (1.1) la connexion entre l'unité de transmission de pression de freinage (31) et le raccord d'entrée (42e) de la pompe (42), et
-- établissant dans au moins une position active (1.3) une connexion d'écoulement primaire (A) entre l'unité de transmission de pression de freinage (31) et le raccord d'entrée (42e) de la pompe (42),
- une première électrovanne (50) est disposée dans une conduite entre un raccord de sortie (42a) de la pompe (42) et l'unité de transmission de pression de freinage (31), cette électrovanne établissant dans une position de base inactive (50.1) la connexion entre le raccord de sortie (42a) de la pompe (42) et l'unité de transmission de pression de freinage (31), et bloquant cette connexion dans une position active (50.2),
- une deuxième électrovanne (39) est disposée dans une conduite entre le frein sur roue (37) et le raccord d'entrée (42e) de la pompe (42), cette électrovanne bloquant dans une position de base inactive (39.1) la connexion entre le frein de roue (37) et le raccord d'entrée (42e) de la pompe (42) et établissant cette connexion dans une position active (39.2),
- une troisième électrovanne (38) est disposée dans une conduite entre le raccord de sortie (42a) de la pompe (42) et le frein de roue (37), cette électrovanne établissant la connexion entre le raccord de sortie (42a) de la pompe (42) et le frein de roue (37) dans une position inactive (38.1) et bloquant cette connexion dans une position active (38.2), où,
- au cours d'une phase de fonctionnement « maintenir la pression » (II), le premier dispositif de soupape (1) est dans la position inactive (1.1), la première électrovanne (50) est dans la position active (50.2), la deuxième électrovanne (39) est dans la position inactive (39.1),
- la troisième électrovanne (38) est dans la position active (38.2), et,
- au cours d'une phase de fonctionnement « relâcher la pression » (III), le premier dispositif de soupape (1) est dans la position inactive (1.1) et la première (50), la deuxième (39) et la troisième électrovanne (38) sont chacune dans la position active (50.2; 39.2; 38.2),
**caractérisé en ce que** le fluide de frein ne s'écoule que dans un accumulateur intermédiaire (41).

2. Système de freinage antiblocage selon la revendication 1, **caractérisé en ce que**
le premier dispositif de soupape (1) établit, dans une autre position active (1.2), une connexion d'écoulement secondaire (B) entre l'unité de transmission de pression de freinage (31) et le raccord d'entrée (42e) de la pompe (42), la connexion d'écoulement secondaire (B) présentant une section de passage plus petite que celle de la connexion d'écoulement primaire (A), et
le premier dispositif de soupape (1) est dans l'autre position active (1.2) au cours d'une phase de fonctionnement « établir une autre pression » (IV) tandis que la première électrovanne (50) est dans la position active (50.2) et la deuxième (39) et la troisième électrovanne (38) sont chacune dans la position inactive (39.1; 38.1).

3. Système de freinage antiblocage selon la revendication 1 ou 2, **caractérisé en ce que** la troisième électrovanne (38) est dans la position inactive (38.1) au cours d'une phase de fonctionnement « maintenir l'autre pression » (V) tandis que la première électrovanne (50) est dans la position active (50.2), et le premier dispositif de soupape (1) et la deuxième électrovanne (39) sont chacun dans la position inactive (1.1; 39.1).

4. Système de freinage antiblocage selon l'une des revendications 1 à 3,
**caractérisé en ce que** la troisième électrovanne (38) est dans la position inactive (38.1) au cours d'une phase de fonctionnement « relâcher l'autre pression » (VI) tandis que la première (50) et la deuxième électrovanne (39) sont dans la position active (50.2; 39.2), et le premier dispositif de soupape (1) est dans la position inactive (1.1).
